# FASCICULE DE BREVET EUROPEEN

(11) **EP 3 158 635 B1**
(45) Date de publication et mention de la délivrance du brevet: **31.07.2024**
(21) Numéro de dépôt: 15732856.8
(22) Date de dépôt: 11.06.2015
(51) Int. Cl.: F02N 11/04, F02N 11/08, F02N 15/08, F02B 67/06, F02D 41/20, F16H 7/08

(54) **PROCÉDÉ ET DISPOSITIF DE DÉMARRAGE OU DE RELANCE D'UN MOTEUR THERMIQUE, NOTAMMENT DE VEHICULE AUTOMOBILE**
VERFAHREN UND VORRICHTUNG ZUM ANLASSEN ODER ZUM WIEDERANLASSEN EINES VERBRENNUNGSMOTORS, INSBESONDERE FÜR EINEN KRAFTFAHRZEUG
METHOD AND DEVICE FOR STARTING OR FOR RESTARTING A HEAT ENGINE, PARTICULARLY OF A MOTOR VEHICLE

(30) Priorité: 20.06.2014 FR 1455677
(43) Date de publication de la demande: 26.04.2017
(73) Titulaire: Valeo Electrification, 95800 Cergy (FR)
(72) Inventeur: SCHMITTER, Romain, 94300 Vincennes (FR); GRANZIERA, Cyril, 75015 Paris (FR); KOBYLANSKI, Luc, 75014 Paris (FR); BODIN, Ludovic, 94420 Le Plessis Trevise (FR); MALBRANQUE, Ronald, 94300 Vincennes (FR)
(74) Mandataire: Valeo Powertrain Systems
(86) Numéro de dépôt international: PCT/FR2015/051542
(87) Numéro de publication internationale: WO 2015/193586

(56) Documents cités:
- EP-A2- 1 760 297
- WO-A2-2010/010271
- WO-A2-2012/107016
- DE-A1- 102012 203 374
- FR-A1- 2 858 665
- FR-A1- 2 925 128
- FR-A1- 2 949 514
- US-A1- 2006 017 290

## Description

### DOMAINE TECHNIQUE DE L'INVENTION.

La présente invention concerne un procédé et un dispositif de démarrage ou de relance d'un moteur thermique, notamment de véhicule automobile.

L'invention concerne aussi un alterno-démarreur apte à la mise en oeuvre du procédé et compris dans ce dispositif.

### ARRIERE PLAN TECHNOLOGIQUE DE L'INVENTION.

Des considérations d'économie d'énergie et de réduction de la pollution, surtout en milieu urbain, conduisent les constructeurs de véhicules automobiles à équiper leurs modèles d'un système d'arrêt/ redémarrage automatique, tel que le système connu sous le terme anglo-saxon de « Stop and Go ».

Ainsi que le rappelle la société VALEO EQUIPEMENTS ELECTRIQUES MOTEUR dans la demande de brevet FR2875549, les véhicules sont rendus aptes à fonctionner selon le mode « Stop and Go » grâce à une machine électrique réversible, ou alterno-démarreur, couplée au moteur thermique, alimentée par un onduleur en mode « démarreur ».

L'utilisation d'un alterno-démarreur dans un mode de fonctionnement « Stop and Go » consiste, sous certaines conditions, à provoquer l'arrêt complet du moteur thermique lorsque le véhicule est lui-même à l'arrêt, puis à redémarrer le moteur thermique à la suite, par exemple, d'une action du conducteur interprétée comme une demande de redémarrage.

Une situation typique de « Stop and Go » est celle de l'arrêt à un feu rouge. Lorsque le véhicule s'arrête au feu, le moteur thermique est automatiquement stoppé, puis, quand le feu devient vert, le moteur est redémarré au moyen de l'alterno-démarreur, comme suite à la détection par le système de l'enfoncement de la pédale d'embrayage par le conducteur.

De manière générale, l'alterno-démarreur doit produire le couple moteur approprié dès l'apparition d'un stimulus traduisant la volonté du conducteur de redémarrer ou de relancer son véhicule.

La demande de brevet DE 10 2012 203374 A1 décrit un procédé de démarrage similaire à celui de la présente invention utilisant notamment la vitesse de la machine.

Il va de soi que cette fonction de redémarrage automatique réalisée par un système alterno-démarreur est une fonction qui doit être aussi transparente que possible pour le conducteur du véhicule.

Notamment, le délai entre la commande de démarrage et le démarrage effectif du moteur thermique au moyen de l'alterno-démarreur doit être le plus bref possible.

Dans ce but, on réalise une étape de préflux au cours de laquelle le rotor de l'alterno-démarreur est alimenté en électricité sans que le stator soit alimenté.

A l'issue de l'étape de préflux, le stator est alimenté et l'alterno-démarreur produit un couple suffisamment élevé qui permet d'entraîner rapidement le moteur thermique au-delà du point de passage de compression de manière à démarrer celui-ci.

Cet alternateur réversible est, le plus souvent, implanté au niveau d'une face du moteur thermique, face sur laquelle est présente une poulie de vilebrequin du moteur thermique.

Une courroie est prévue, d'une part, pour entraîner une poulie d'alternateur et, le cas échéant, un ou plusieurs accessoires, lorsque le moteur thermique est en fonctionnement, et d'autre part, pour transmettre un couple délivré par l'alternateur réversible vers la poulie de vilebrequin lors des phases de redémarrage ou de relance.

Un tendeur est généralement également prévu pour appuyer sur un brin de la courroie entre la poulie d'alternateur et la poulie de vilebrequin.

Dans cette configuration, la transmission d'un couple moteur important par la courroie à l'issue de l'étape de préflux peut endommager celle-ci.

Pour pallier cet inconvénient, la société demanderesse a proposé dans la demande internationale WO2009/077687 A2 de limiter la durée de l'étape de préflux.

Cependant, il a été constaté que la brusque variation de couple générait, via le tendeur, des effets acoustiques jugés gênants par l'utilisateur.

Dans la demande de brevet français FR2918127, la société demanderesse a proposé de tendre la courroie en appliquant un couple dans le sens opposé à celui du démarrage. Mais cette solution ne diminue pas la variation de couple, au contraire, et ne supprime donc pas les effets acoustiques. De plus, le tendeur doit être compatible.

Il existe par conséquent un besoin pour un procédé et un dispositif de démarrage ou de relance d'un moteur thermique qui assurent un délai de démarrage ou de relance court tout en limitant les effets acoustiques perçus comme gênants par l'utilisateur.

### DESCRIPTION GENERALE DE L'INVENTION.

La présente invention vise à satisfaire ce besoin et a précisément pour objet un procédé de démarrage ou de relance d'un moteur thermique, notamment de véhicule automobile, à l'aide d'une machine électrique tournante.

Cette machine électrique tournante comporte un organe d'entraînement et est associée à un organe de transmission, du type d'une courroie ou d'une chaîne, qui coopère avec cet organe d'entraînement et avec le moteur thermique pour provoquer un démarrage ou une relance de ce moteur thermique.

Un tendeur est prévu pour appuyer sur un brin de l'organe de transmission qui s'étend entre la machine électrique tournante et le moteur thermique.

Conformément à l'invention, le procédé selon l'invention prévoit les deux étapes suivantes :
une première étape pendant laquelle une vitesse de rotation de ladite machine électrique tournante, un courant d'excitation de ladite machine électrique tournante, un l'angle d'un onduleur alimentant ladite machine électrique tournante, et une la température de ladite machine électrique tournante sont acquis et un angle d'avance dudit onduleur est déterminé à l'aide d'une cartographie d'un couple réduit fonction de l'angle d'avance prenant en compte la vitesse de rotation de ladite machine électrique, de l'angle d'ouverture dudit onduleur, du courant d'excitation de ladite machine électrique tournante, et de la température de ladite machine électrique tournante,
ladite machine électrique tournante fournit un couple réduit prédéterminé dans le sens dudit démarrage pendant une durée prédéterminée pour tendre ledit organe de transmission; ledit couple réduit prédéterminé étant contrôlé en pilotant l'onduleur grâce à l' angle d'avance déterminé, ledit,
   - une seconde étape pendant laquelle ladite machine électrique tournante fournit un couple optimal prédéterminé pour entraîner rapidement ledit moteur thermique et provoquer son démarrage

Dans une phase de démarrage, le couple réduit prédéterminé est fort avantageusement inférieur à un couple nominal nécessaire à un passage d'un point de compression du moteur thermique.

Alternativement, dans une phase de relance, le couple réduit prédéterminé est fonction de préférence d'une vitesse de rotation de la machine électrique tournante.

Dans ce cas, on contrôle en outre de préférence le couple réduit prédéterminé en pilotant un angle d'ouverture de l'onduleur.

Selon le procédé de l'invention, on tire bénéfice d'un contrôle du couple réduit prédéterminé en pilotant également un courant d'excitation de la machine électrique tournante.

La première étape du procédé de l'invention peut dans certaines applications être précédée d'une étape de préflux, la deuxième étape étant alors conçue de manière à prendre en compte cette étape de préflux et à ne dégrader son intérêt.

L'invention concerne aussi un dispositif de démarrage ou de relance d'un moteur thermique, notamment de véhicule automobile, adapté à la mise en oeuvre du procédé décrit ci-dessus.

Ce dispositif est du type de ceux comportant:
- une machine électrique tournante munie d'un organe d'entraînement;
- un organe de transmission, du type d'une courroie ou d'une chaîne, coopérant avec l'organe d'entraînement de la machine électrique tournante et avec le moteur thermique pour provoquer un démarrage ou une relance de ce moteur thermique;

- un tendeur pour appuyer sur un brin de l'organe de transmission s'étendant entre la machine électrique tournante et le moteur thermique;
- un onduleur alimentant la machine électrique tournante;
- un système de pilotage de la machine électrique tournante contrôlant un couple moteur.

Le dispositif de démarrage ou de relance d'un moteur thermique selon l'invention est remarquable en ce qu'il comprend en outre des moyens d'acquisition d'au moins les paramètres suivants:
- une vitesse de rotation de la machine électrique tournante;
- un angle d'ouverture de l'onduleur;
- un courant d'excitation de la machine électrique tournante;
- une température de la machine électrique tournante;
dans lequel ledit système de pilotage comprend une cartographie d'un couple réduit prédéterminé en fonction de l'angle d'avance prenant en compte la vitesse de rotation de ladite machine électrique tournante, le courant d'excitation de ladite machine électrique tournante, l'angle d'ouverture dudit onduleur, et la température de ladite machine électrique tournante afin de déterminer un angle d'avance dudit onduleur et de piloter l'onduleur grâce à l'angle d'avance ainsi déterminé de manière à tendre ledit organe de transmission quand ledit couple moteur est égal audit couple réduit prédéterminé pendant une durée prédéterminée, ledit couple réduit prédéterminé étant inférieur à un couple optimal permettant d'entraîner rapidement ledit moteur thermique.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** représente partiellement une face d'un moteur thermique de véhicule automobile et un agencement mécanique d'un dispositif de démarrage ou de relance d'un type conforme à l'invention.
La **Figure 2** est un schéma électrique synoptique d'un dispositif de démarrage ou de relance d'un moteur thermique de véhicule automobile d'un type conforme à l'invention.
Les **Figures 3a et 3b** sont la représentation d'une cartographie, en fonction de l'angle d'avance de l'onduleur et de la température de l'alterno-démarreur, du couple réduit prédéterminé mise en oeuvre dans un mode de réalisation préféré du procédé et du dispositif de démarrage ou de relance d'un moteur thermique de véhicule automobile selon l'invention, respectivement dans une phase de démarrage et dans une phase de relance (à 100 tr/ mn).

### DESCRIPTION DU MODE DE REALISATION PREFERE DE L'INVENTION.

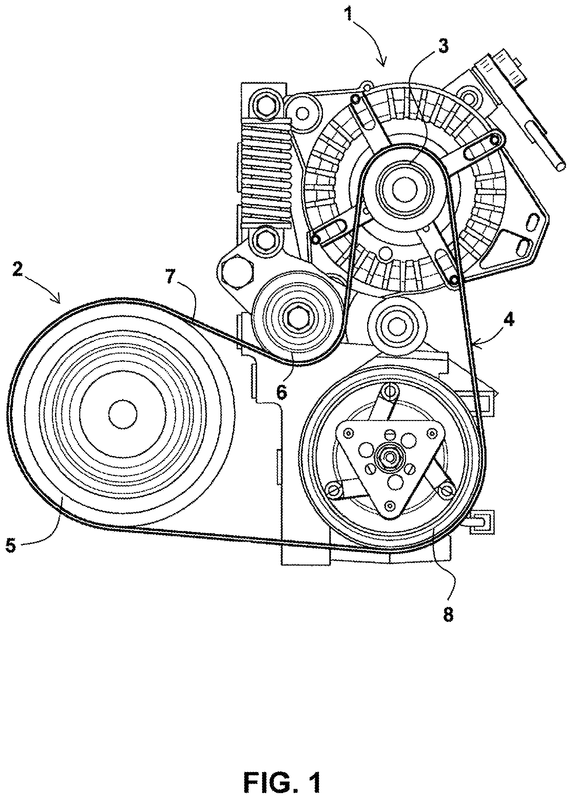

Le mode de réalisation préféré de l'invention concerne les véhicules équipés d'un alterno-démarreur 1 agencé sur une face d'un moteur thermique 2, tel que cela est représenté sur la **Figure 1****.**

L'alterno-démarreur 1 est muni, comme le montre bien la **Figure 1****,** d'un organe d'entraînement, formé ici par une première poulie 3, avec lequel coopère un organe de transmission constitué par une courroie 4 pour entraîner le moteur thermique 2 au moyen d'une deuxième poulie 5 solidaire d'un vilebrequin de ce moteur thermique 2.

Un tendeur 6 comportant un galet est en appui sur un brin 7 de la courroie 4 s'étendant entre l'alterno-démareur 1 et le vilebrequin du moteur thermique 2.

La courroie 4 sert également, via un autre brin de la courroie 4, à entraîner au moyen d'une troisième poulie 8 un accessoire, par exemple un compresseur de climatiseur, non- représenté.

De manière connue en soit l'alterno-démarreur 1 est alimenté en mode moteur par un onduleur et il est piloté par un système de pilotage contrôlant le couple moteur.

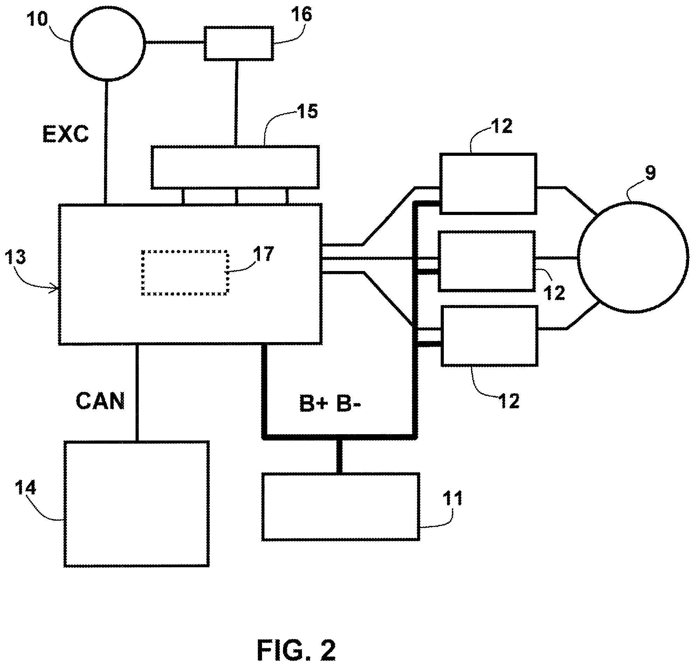

Le schéma synoptique de ces éléments électriques est montré sur la **Figure 2****.**

L'alterno-démarreur 1 représenté schématiquement comprend un stator triphasé 9 et un rotor 10 à excitation.

Les trois enroulements de phases du stator 9 sont alimentés B+, B-à partir d'une batterie connectée au réseau de puissance de bord 11 par des circuits de puissance 12 commandés par le système de pilotage 13.

Le système de pilotage 13 contrôle également un courant d'excitation EXC circulant dans un inducteur du rotor 10.

Le système de pilotage électronique 13 reçoit des paramètres de fonctionnement du moteur thermique 2, et d'autres informations de contexte par des liaisons filaires dédiées ou par un bus de communication de données embarqué de type LIN ou CAN à partir de l'unité de contrôle moteur 14.

Dans le but de limiter les effets vibratoires gênants, le procédé de démarrage ou de relance du moteur thermique 2 selon l'invention consiste essentiellement à pré-tendre la courroie 4 avant que l'alterno-démarreur 1 n'applique un couple moteur suffisant pour entraîner rapidement le moteur thermique 2.

Dans une première étape, le système de pilotage 13 pilote donc l'alterno-démarreur 1 de manière à ce qu'il fournisse seulement un couple réduit prédéterminé pour tendre la courroie 4.

Pour ce faire, le dispositif de démarrage ou de relance selon l'invention comprend trois capteurs à effet Hall 15 solidaires du stator 9 qui permettent de déterminer la position angulaire du rotor 10 par rapport au stator 9 grâce à une cible magnétique 16 fixée sur le rotor 10.

En fonction de cette position angulaire, le système de pilotage 13 commande les courants de phases de manière à ce qu'ils présentent un angle d'avance (différence de phase avec la fcem de la machine) correspondant au couple réduit prédéterminé souhaité.

Une cartographie du couple réduit prédéterminé en fonction de l'angle d'avance est stockée dans une mémoire 17 du système de pilotage 13.

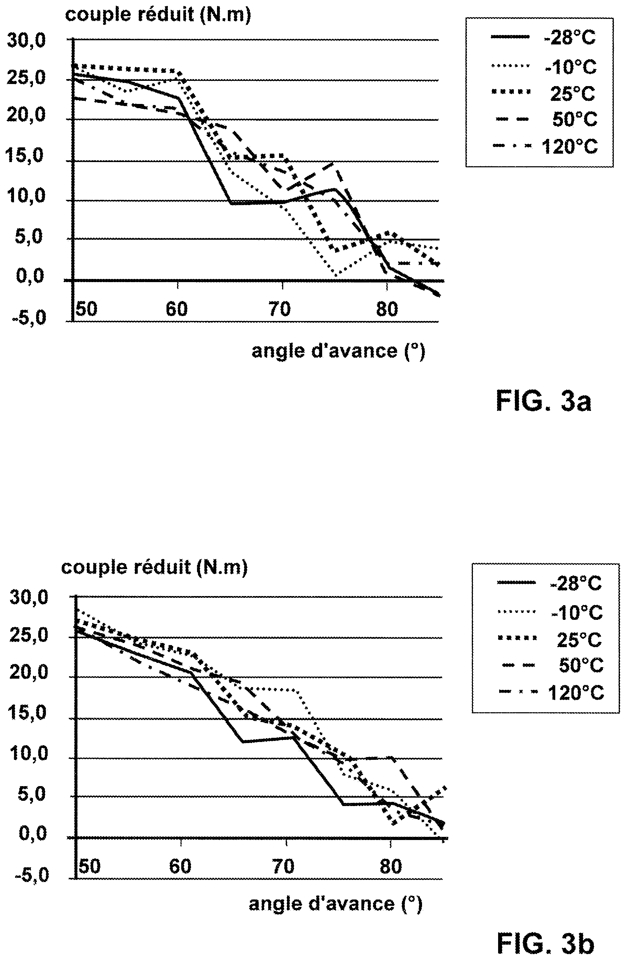

La **Figure 3a** est une représentation d'un exemple d'une cartographie utilisée au démarrage d'un moteur thermique 2 d'une cylindrée courante.

Dans cet exemple, un angle d'ouverture de l'onduleur 12, 13 (c'est-à-dire le rapport cyclique des courants de phases en degrés) a été fixé à 135°; une intensité du courant d'excitation EXC a été fixée à 8 A.

Cette intensité correspond à une valeur cible de l'étape de préflux précédant la première étape d'application du couple réduit prédéterminé.

Un angle d'avance d'environ 60° permet d'obtenir un couple réduit sensiblement égal à 20 N.m.

Ce couple réduit fourni par l'alterno-démarreur 1 ne permet pas au moteur thermique 2 de franchir un premier point de compression, mais permet une mise en tension de la courroie 4.

La cartographie prend en compte une température de l'alterno-démarreur 1.

Mais, comme le montre bien la **Figure 3a****,** il s'avère que celle-ci n'a que peu d'impact pour la machine considérée (courbe en trait plein pour - 28°C, en trait pointillé fin pour -10°C, en trait pointillé épais pour 25°C,en trait tireté pour 50°C, en trait mixte pour 120°C).

Dans une phase de relance du moteur thermique 2, la cartographie prend en compte la vitesse de rotation de l'alterno-démarreur 1.

La **Figure 3b** est un exemple pour une vitesse de rotation de 100 tr/mn, dans les mêmes conditions que pour la **Figure 3a****,** c'est-à-dire un angle d'ouverture de 135° et un courant d'excitation EXC de 8A.

Un angle d'avance de sensiblement 60° permet dans ce cas également d'obtenir un couple réduit d'environ 20N.m.

Selon l'invention, la cartographie du couple réduit prédéterminé en fonction de l'angle d'avance prend en général en compte la vitesse de rotation de l'alterno-démarreur 1 de préférence dans une plage de 0 à environ 200 tr/mn, ainsi que d'autres paramètres, comme l'intensité du courant d'excitation EXC, l'angle d'ouverture de l'onduleur et la température.

Le dispositif de démarrage ou de relance d'un moteur thermique 2 selon l'invention comprend donc autant que de besoin des capteurs correspondants 15, par exemple un shunt au niveau du circuit d'excitation pour la mesure de l'intensité du courant d'excitation EXC.

Comme il va de soi, l'invention ne se limite pas au seul mode d'exécution préférentiel décrit ci-dessus.

La cartographie présentée ne correspond qu'aux caractéristiques particulières d'un alterno-démarreur 1 et d'un moteur thermique 2 choisis à titre d'exemple.

La description ci-dessus s'appliquerait à des machines électriques tournantes autres qu'un alterno-démarreur triphasé à excitation 1.

Le nombre de phases de ces machines électriques peut être supérieur à trois, étant par exemple égal à six pour des machines hexaphasées.

Le procédé de démarrage ou de relance d'un moteur thermique 2 à l'aide d'une machine électrique tournante 1 selon l'invention s'applique de manière générale aussi bien à des machines synchrones à aimants permanents, à des machine à griffes, à des machines à rotor bobiné à double excitation, à des machines asynchrones, à des machines à reluctance variable, ou à des machines à courant continu.

L'invention embrasse donc au contraire toutes les variantes possibles de réalisation qui resteraient dans le cadre défini par les revendications ci-après.

## Revendications

1. Procédé de démarrage ou de relance d'un moteur thermique (2), notamment de véhicule automobile, à l'aide d'une machine électrique tournante (1) comportant un organe d'entraînement (3) et d'un organe de transmission (4), du type d'une courroie (4) ou d'une chaîne, coopérant avec ledit organe d'entraînement (3) et avec ledit moteur thermique (2) pour provoquer un démarrage ou une relance dudit moteur thermique (2), un tendeur (6) étant prévu pour appuyer sur un brin (7) dudit organe de transmission (4) s'étendant entre ladite machine électrique tournante (1) et ledit moteur thermique (2), lequel procédé comporte:
- une première étape pendant laquelle une vitesse de rotation de ladite machine électrique tournante (1), un courant d'excitation (EXC) de ladite machine électrique tournante (1), un angle d'un onduleur alimentant
ladite machine électrique tournante (1), et une la température de ladite machine électrique tournante (1) sont acquis et un angle d'avance dudit onduleur (12, 13) est déterminé à l'aide d'une cartographie (17) d'un couple réduit fonction de l'angle d'avance prenant en compte la vitesse de rotation de ladite machine électrique (1), de l'angle d'ouverture dudit onduleur (12, 13), du courant d'excitation (EXC) de ladite machine électrique tournante (1), et de la température de ladite machine électrique tournante (1)
ladite machine électrique tournante (1) fournit un couple réduit prédéterminé dans le sens dudit démarrage pendant une durée prédéterminée pour tendre ledit organe de transmission (4); ledit couple réduit prédéterminé étant contrôlé en pilotant l'onduleur grâce à l'angle d'avance déterminé,
- une seconde étape pendant laquelle ladite machine électrique tournante (1) fournit un couple optimal prédéterminé pour entraîner rapidement ledit moteur thermique (2) et provoquer son démarrage.

2. Procédé de démarrage ou de relance d'un moteur thermique (2) selon la revendication 1, **caractérisé en ce que** dans une phase de démarrage ledit couple réduit prédéterminé est inférieur à un couple nominal nécessaire à un passage d'un point de compression dudit moteur thermique (2).

3. Procédé de démarrage ou de relance d'un moteur thermique (2) selon l'une quelconque des revendications précédentes, **caractérisé en ce que** ladite première étape est précédée d'une étape de préflux.

4. Dispositif de démarrage ou de relance d'un moteur thermique (2), notamment de véhicule automobile, adapté à la mise en oeuvre du procédé selon l'une quelconque des revendications précédentes, ledit dispositif étant du type de ceux comportant:
- une machine électrique tournante (1) munie d'un organe d'entraînement (3);
- un organe de transmission (4), du type d'une courroie (4) ou d'une chaîne, coopérant avec ledit organe d'entraînement (3) de ladite machine électrique tournante (1) et avec ledit moteur thermique (2) pour provoquer un démarrage ou une relance dudit moteur thermique (2);
- un tendeur (6) pour appuyer sur un brin (7) dudit organe de transmission (4) s'étendant entre ladite machine électrique tournante (1) et ledit moteur thermique (2);
- un onduleur (12, 13) alimentant ladite machine électrique tournante (1);
- un système de pilotage (13) de ladite machine électrique tournante (1) contrôlant un couple moteur;
lequel dispositif comprenant en outre des moyens d'acquisition d'au moins les paramètres suivants:
- une vitesse de rotation de ladite machine électrique tournante (1);
- un angle d'ouverture dudit onduleur (12, 13);
- un courant d'excitation (EXC) de ladite machine électrique tournante (1);
- une température de ladite machine électrique tournante (1);
dans lequel ledit système de pilotage (13) comprend une cartographie (17) d'un couple réduit prédéterminé en fonction de l'angle d'avance prenant en compte la vitesse de rotation de ladite machine électrique tournante, le courant d'excitation (EXC) de ladite machine électrique tournante, l'angle d'ouverture dudit onduleur, et la température de ladite machine électrique tournante afin de déterminer un angle d'avance dudit onduleur (12, 13) et de piloter l'onduleur grâce à l'angle d'avance ainsi déterminé de manière à tendre ledit organe de transmission (4) quand ledit couple moteur est égal audit couple réduit prédéterminé pendant une durée prédéterminée, ledit couple réduit prédéterminé étant inférieur à un couple optimal permettant d'entraîner rapidement ledit moteur thermique (2).

## Patentansprüche

1. Verfahren zum Anlassen oder zum Wiederanlassen eines Verbrennungsmotors (2), insbesondere eines Kraftfahrzeugs, mit Hilfe einer rotierenden elektrischen Maschine (1), die ein Antriebsorgan (3) umfasst, und eines Übertragungsorgans (4) vom Typ Riemen (4) oder Kette, das mit dem Antriebsorgan (3) und mit dem Verbrennungsmotor (2) zusammenwirkt, um ein Anlassen oder ein Wiederanlassen des Verbrennungsmotors (2) zu bewirken, wobei eine Spanneinrichtung (6) vorgesehen ist, um auf ein Trum (7) des Übertragungsorgans (4), das sich zwischen der rotierenden elektrischen Maschine (1) und dem Verbrennungsmotor (2) erstreckt, zu drücken, wobei das Verfahren Folgendes umfasst:
- einen ersten Schritt, während dessen eine Drehgeschwindigkeit der rotierenden elektrischen Maschine (1), ein Erregungsstrom (EXC) der rotierenden elektrischen Maschine (1), ein Winkel eines Wechselrichters, der die rotierende elektrische Maschine (1) mit Strom versorgt, und eine Temperatur der rotierenden elektrischen Maschine (1) erfasst werden und ein Voreilwinkel des Wechselrichters (12, 13) mit Hilfe einer Kartographie (17) eines von dem Voreilwinkel abhängigen reduzierten Drehmoments unter Berücksichtigung der Drehgeschwindigkeit der elektrischen Maschine (1), des Öffnungswinkels des Wechselrichters (12, 13), des Erregungsstrom (EXC) der rotierenden elektrischen Maschine (1) und der Temperatur der rotierenden elektrischen Maschine (1) bestimmt wird, wobei die rotierende elektrische Maschine (1) für eine vorbestimmte Dauer ein vorbestimmtes reduziertes Drehmoment in der Richtung des Anlassens liefert, um das Übertragungsorgan (4) zu spannen; wobei das vorbestimmte reduzierte Drehmoment gesteuert wird, indem der Wechselrichter mittels des bestimmten Voreilwinkels angesteuert wird,
- einen zweiten Schritt, während dessen die rotierende elektrische Maschine (1) ein vorbestimmtes optimales Drehmoment liefert, um den Verbrennungsmotor (2) schnell anzutreiben und sein Anlassen zu bewirken.

2. Verfahren zum Anlassen oder zum Wiederanlassen eines Verbrennungsmotors (2) nach Anspruch 1, **dadurch gekennzeichnet, dass** während einer Anlassphase das vorbestimmte reduzierte Drehmoment kleiner als ein Nenndrehmoment ist, das für ein Überschreiten eines Kompressionspunktes des Verbrennungsmotors (2) notwendig ist.

3. Verfahren zum Anlassen oder zum Wiederanlassen eines Verbrennungsmotors (2) nach einem beliebigen der vorhergehenden Ansprüche, **dadurch gekennzeichnet, dass** dem ersten Schritt ein Vorflussschritt vorausgeht.

4. Vorrichtung zum Anlassen oder zum Wiederanlassen eines Verbrennungsmotors (2), insbesondere eines Kraftfahrzeugs, die zur Umsetzung des Verfahrens nach einem beliebigen der vorhergehenden Ansprüche angepasst ist, wobei die Vorrichtung vom Typ derer ist, die Folgendes umfassen:
- eine rotierende elektrische Maschine (1), die über ein Antriebsorgan (3) verfügt;
- ein Übertragungsorgan (4) vom Typ Riemen (4) oder Kette, das mit dem Antriebsorgan (3) der rotierenden elektrischen Maschine (1) und mit dem Verbrennungsmotor (2) zusammenwirkt, um ein Anlassen oder ein Wiederanlassen des Verbrennungsmotors (2) zu bewirken;
- eine Spanneinrichtung (6), um auf ein Trum (7) des Übertragungsorgans (4), das sich zwischen der rotierenden elektrischen Maschine (1) und dem Verbrennungsmotor (2) erstreckt, zu drücken;
- einen Wechselrichter (12, 13), der die rotierende elektrische Maschine (1) mit Strom versorgt;
- ein Ansteuerungssystem (13) der rotierenden elektrischen Maschine (1), das ein Motordrehmoment steuert;
wobei die Vorrichtung ferner Mittel zum Erfassen mindestens der folgenden Parameter beinhaltet:
- einer Drehgeschwindigkeit der rotierenden elektrischen Maschine (1);
- eines Öffnungswinkels des Wechselrichters (12, 13);
- eines Erregungsstroms (EXC) der rotierenden elektrischen Maschine (1);
- einer Temperatur der rotierenden elektrischen Maschine (1);
wobei das Ansteuerungssystem (13) eine Kartographie (17) eines in Abhängigkeit von dem Voreilwinkel vorbestimmten reduzierten Drehmoments beinhaltet, die die Drehgeschwindigkeit der rotierenden elektrischen Maschine, den Erregungsstrom (EXC) der rotierenden elektrischen Maschine, den Öffnungswinkel des Wechselrichters und die Temperatur der rotierenden elektrischen Maschine berücksichtigt, um einen Voreilwinkel des Wechselrichters (12, 13) zu bestimmen und den Wechselrichter mittels des so bestimmten Voreilwinkels anzusteuern, um das Übertragungsorgan (4) zu spannen, wenn das Motordrehmoment für eine vorbestimmte Dauer gleich dem vorbestimmten reduzierten Drehmoment ist, wobei das vorbestimmte reduzierte Drehmoment kleiner als ein optimales Drehmoment ist, das ein schnelles Antreiben des Verbrennungsmotors (2) gestattet.

## Claims

1. Method for starting or restarting a combustion engine (2), in particular of a motor vehicle, with the aid of a rotary electric machine (1) having a drive member (3) and of a transmission member (4), of the belt (4) or chain type, cooperating with said drive member (3) and with said combustion engine (2) so as to cause starting or restarting of said combustion engine (2), a tensioner (6) being provided to bear on a strand (7) of said transmission member (4) extending between said rotary electric machine (1) and said combustion engine (2), which method involves:
- a first step during which a rotational speed of said rotary electric machine (1), an excitation current (EXC) of said rotary electric machine (1), an angle of an inverter supplying power to said rotary electric machine (1), and a temperature of said rotary electric machine (1) are acquired and an advance angle of said inverter (12, 13) is determined with the aid of a map (17) of a reduced torque that is a function of the advance angle taking into account the rotational speed of said electric machine (1), the opening angle of said inverter (12, 13), the excitation current (EXC) of said rotary electric machine (1), and the temperature of said rotary electric machine (1)
said rotary electric machine (1) provides a predetermined reduced torque in the direction of said starting for a predetermined duration so as to tension said transmission member (4); said predetermined reduced torque being controlled by controlling the inverter by virtue of the determined advance angle,
- a second step during which said rotary electric machine (1) provides a predetermined optimal torque for rapidly driving said combustion engine (2) and causing starting thereof.

2. Method for starting or restarting a combustion engine (2) according to Claim 1, **characterized in that** in a starting phase said predetermined reduced torque is lower than a nominal torque necessary for passage of a compression point of said combustion engine (2).

3. Method for starting or restarting a combustion engine (2) according to either one of the preceding claims, **characterized in that** said first step is preceded by a prefluxing step.

4. Method for starting or restarting a combustion engine (2), in particular of a motor vehicle, designed for the implementation of the method according to any one of the preceding claims, said device being of the type having:
- a rotary electric machine (1) provided with a drive member (3);
- a transmission member (4), of the belt (4) or chain type, cooperating with said drive member (3) of said rotary electric machine (1) and with said combustion engine (2) so as to cause starting or restarting of said combustion engine (2);
- a tensioner (6) for bearing on a strand (7) of said transmission member (4) extending between said rotary electric machine (1) and said combustion engine (2);
- an inverter (12, 13) supplying power to said rotary electric machine (1);
- a control system (13) of said rotary electric machine (1) controlling an engine torque;
which device also comprises means for acquiring at least the following parameters:
- a rotational speed of said rotary electric machine (1);
- an opening angle of said inverter (12, 13);
- an excitation current (EXC) of said rotary electric machine (1);
- a temperature of said rotary electric machine (1);
wherein said control system (13) comprises a map (17) of a predetermined reduced torque as a function of the advance angle taking into account the rotational speed of said rotary electric machine, the excitation current (EXC) of said rotary electric machine, the opening angle of said inverter, and the temperature of said rotary electric machine in order to determine an advance angle of said inverter (12, 13) and to control the inverter by virtue of the advance angle thus determined so as to tension said transmission member (4) when said engine torque is equal to said predetermined reduced torque for a predetermined duration, said predetermined reduced torque being lower than an optimal torque making it possible to rapidly drive said combustion engine (2).
